# EUROPÄISCHE PATENTSCHRIFT

(11) **EP 0 532 907 B1**
(45) Veröffentlichungstag und Bekanntmachung des Hinweises auf die Patenterteilung: **21.02.1996**
(21) Anmeldenummer: 92113725.3
(22) Anmeldetag: 12.08.1992
(51) Int. Cl.: F03B 3/18, F01D 17/16

(54) **Axialdurchströmte Turbine**
Axial turbine
Turbine axiale

(30) Priorität: 19.09.1991 CH 2770/91
(43) Veröffentlichungstag der Anmeldung: 24.03.1993
(73) Patentinhaber: ASEA BROWN BOVERI AG, CH-5401 Baden (CH)
(72) Erfinder: Baets, Jozef, CH-5400 Baden (CH); Elvekjaer, Peter, CH-5426 Lengnau (CH)

(56) Entgegenhaltungen:
- EP-A- 0 253 234
- FR-A- 2 485 102
- US-A- 2 064 313
- US-A- 2 316 452

## Beschreibung

### Technisches Gebiet

Die Erindung betrifft eine von einem kompressiblen Medium axial durchströmte Turbine gemäss Oberbegriff des Patentanspruchs 1.

### Stand der Technik

Derartige Turbinen sind beispielsweise bei Abgasturboladern hinlänglich bekannt. Neben der Leitschaufelverstellung am Verdichter ist als Regeleingriff zur Verbesserung der Beschleunigung und des Drehmomentenverhaltens auch die Leitschaufelverstellung an der Turbine eine mögliche Massnahme. Ein Beispiel hierfür liefert die EP 253 234 A1. Mit den verstellbaren Turbinenleitschaufeln soll für einen gegebenen Durchsatz ein grösseres Gefälle erzeugt werden. Dadurch erhöht sich die Turbinenleistung, die Turbinendrehzahl und schliesslich der Ladedruck. Damit die Verstellschaufeln während des "heissen" Betriebes nicht klemmen, müssen sie in der Regel mit angemessenem Spiel eingebaut werden. Besonders im zugedrehten Zustand kann sich die Spaltströmung am Kopf und am Fuss der Schaufeln sehr störend auf die Hauptströmung im Kanal auswirken. Da überdies auf die Verstellschaufeln grosse Fluidkräfte in Axial- und in Umfangsrichtung einwirken, müssen des öfteren die Schaufeln sowohl am Kopf als auch am Fuss eingespannt werden, um die Verstellwelle zu entlasten.

Eine Strömungsmaschine der eingangs genannten Art ist bekannt aus der US-A-2 316 452. Bei diesem Verdichter ist stromaufwärts einer Leitreihe mit verstellbaren Schaufeln ein Gitter mit festen Leitschaufeln angeordnet. Die eigentliche Umlenkung der Strömung erfolgt hier nicht in den mit kurzer Sehne versehenen festen Leitschaufeln, sondern in den vollständig verschliessbaren Verstellschaufeln.

### Darstellung der Erfindung

Der Erfindung liegt besonders die Aufgabe zugrunde, bei axial durchströmten Turbinen der eingangs genannten Art eine Massnahme zu schaffen, mit welcher die auf die Verstellschaufeln wirkenden Strömungskräfte und somit die erforderlichen Stellkräfte reduziert werden können.

Erfindungsgemäss wird dies mit den kennzeichnenden Merkmalen des Patentanspruchs 1 erreicht.

Unter der Voraussetzung, dass die Beschaufelung des festen Leitgitters aus kostengünstigen Teilen aus der Serienfabrikation besteht und dass ihr Teilungsverhältnis für die jeweilige Vollast optimiert ist, ist der Vorteil der Erfindung unter anderem darin zu sehen, dass im Vergleich zu den festen Leitschaufeln nur etwa die Hälfte von verstellbaren Schaufeln vorgesehen werden muss. Darüberhinaus sind infolge der nur schwachen Strömungsumlenkung die auf die Verstellschaufeln wirkenden Kräfte bescheiden, was sich günstig auf die Konfiguration der Verstelleinrichtung auswirkt.

Es ist zweckmässig, wenn die Leitschaufeln eine gerade Skelettlinie mit symmetrischem Profil aufweisen. Mit dieser Massnahme können die hinlänglich bekannten Eigenschaften solcher Gitter auf Unempfindlichkeit in der Anströmung zur verlustarmen Umlenkung genutzt werden.

Es empfiehlt sich, dass die verstellbaren Leitschaufeln im Bereich der Schaufeleintrittskante in radialer Richtung konisch verlaufen. Die Konizität sollte unter Berücksichtigung der maximalen Machzahl gewählt werden. Mit dieser Massnahme ist es möglich, an der Profilnase des Schaufeleintritts Verdichtungsstösse zu vermeiden.

### Kurze Beschreibung der Zeichnung

In der Zeichnung ist ein Ausführungsbeispiel der Erfindung anhand einer einstufigen Abgasturboladerturbine mit axial/radialem Austritt dargestellt.

Es zeigen:
- Fig.1: einen Teillängsschnitt der Turbine;
- Fig.2: die teilweise Abwicklung eines Zylinderschnittes auf mittlerem Durchmesser des durchströmten Kanals gemäss Fig.1

Es sind nur die für das Verständnis der Erfindung wesentlichen Elemente gezeigt. Nicht dargestellt sind von der Anlage beispielsweise der Verdichterteil, die Gehäuse, der Rotor mitsamt Lagerung usw. Die Strömungsrichtung des Arbeitsmittels ist mit Pfeilen bezeichnet.

### Weg zur Ausführung der Erfindung

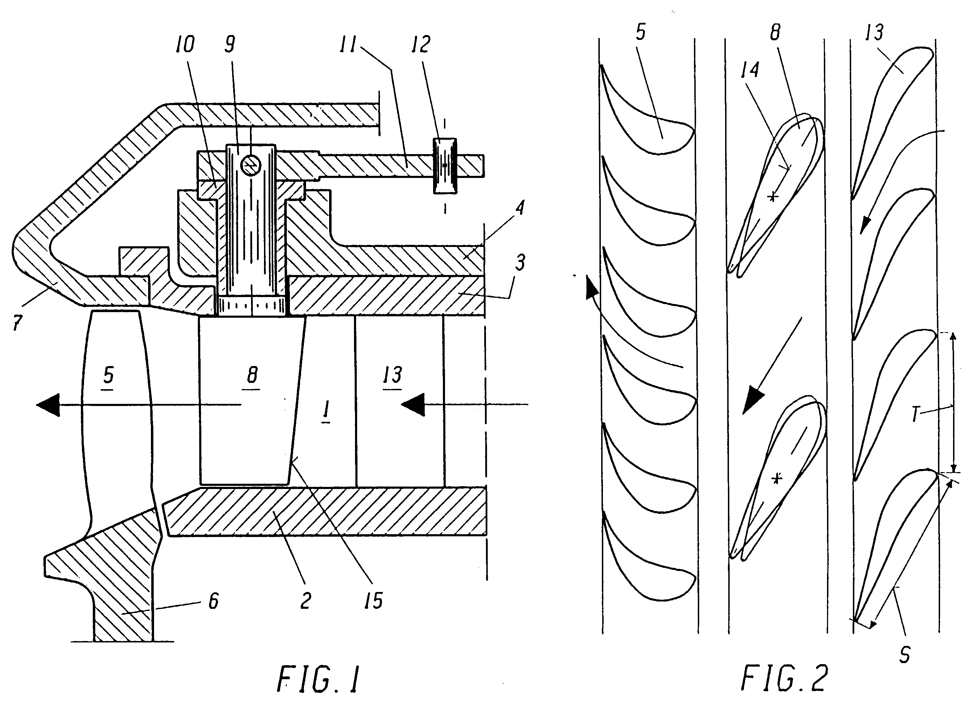

In der in Fig.1 schematisch gezeigten Gasturbine sind die den durchströmten Kanal 1 begrenzenden Wandungen zum einen die innere Nabe 2 und zum andern der äussere Schaufelträger 3. Letzterer ist auf geeignete Art im Gehäuse 4 eingehängt. Im Bereich der Laufschaufeln 5 wird der Kanal 1 innen begrenzt durch die Rotorscheibe 6 und aussen durch die Abdeckung 7.

Die verstellbaren Leitschaufeln 8 sind mit ihrer jeweiligen Verstellwelle 9 vorzugsweise einteilig ausgeführt. Die Welle 9 ist in einer Buchse 10 gelagert, welche das Gehäuse 4 und den Schaufelträger 3 durchdringt. Am ihrem aus der Buchse 10 herausragenden Ende ist die Welle mit einem Schwenkhebel 11 verbunden. Dieser Hebel ist über einen Bolzen 12 mit einem nicht dargestellten Verstellring verbunden.

Stromaufwärts des verstellbaren Leitgitters ist ein klassisches festes Leitgitter angeordnet. Dessen Schaufeln 13 sind hinsichtlich Anzahl sowie bezüglich ihres Verhältnisses Sehne S zu Teilung T strömungstechnisch für Vollast optimiert. Sie verleihen der Strömung einen Vordrall, so dass im nachfolgenden verstellbaren Leitgitter kaum noch eine Umlenkung erfolgt.

Die verstellbaren Leitschaufeln 8 weisen in etwa die gleiche Sehnenlänge S auf wie die festen Leitschaufeln 13. Infolge der sehr schwachen Umlenkung sind sie mit etwa doppelter Teilung im Gitter gestaffelt, so dass ihre Anzahl nur etwa die Hälfte jener der festen Leitschaufeln beträgt. Es handelt sich um symmetrische Profile mit gerader Skelettlinie 14. Bei der gezeigten Abgasturbolader-Anordnung kann die Machzahl 1 am Austritt des festen Leitgitters überschritten werden. Deshalb verläuft die Eintrittskante 15 der Verstellschaufeln in radialer Richtung konisch, um das Auftreten von Verdichtungsstössen an der Profilnase zu vermeiden.

Die eigentliche Verstellung der Leitschaufeln 8 im Gitter erfolgt über das Hebelgestänge 4,11,12 durch nicht dargestellte Betätigungsmittel, wie sie beispielsweise aus dem Verdichterbau bekannt sind. Die Verstellung erfolgt vorzugsweise automatisch in Funktion der Betriebsparameter wie Ladedruck, Drehzahl usw.

Der Zylinderschnitt in Fig. 2 zeigt in vergrössertem Masstab den Schaufelplan in der betrachteten Gasturbinenzone. Zwecks Angabe der Grössenordnung bei einem ausgeführten Beispiel haben die einzelnen Gitter bspw. folgende Daten: Das Verhältnis Profildicke zu Sehne beträgt bei den Verstellschaufeln 0.25. Das Verhältnis Sehne S zu Teilung T beträgt bei den festen Leitschaufeln ca. 1.20, bei den Verstellschaufeln ca. 0.6. Nach der Fachliteratur (beispielsweise TRAUPEL, Thermische Turbomaschinen, 1.Band, 1966, Seite 364, Abb.8.4.1) sind damit die optimalen Teilungsverhältnisse für beide hintereinandergeschaltete Leitgitter erzielt unter Berücksichtigung der bei Abgasturboladerturbinen üblichen Zuström- und Abströmverhältnissen.

Die Leitschaufeln 8 werden unter den gleichen Bedingungen angeströmt, mit denen sie die Leitlaufschaufeln 13 verlassen. Sie sind so angestellt, dass sie im Unempfindlichkeitsbereich arbeiten. Die Abgase verlassen das Verstellgitter bei Vollast unter einem Winkel von ca. 15-20°. Der Verstellbereich der Leitschaufeln 12 beträgt vorzugsweise 5-10° nach beiden Seiten.

Es versteht sich, dass in der Praxis das Verhältnis Teilung zu Sehne optimiert wird bezüglich der Bedeutung der Teillast, mit der die aufzuladende Maschine gefahren wird.

Selbstverständlich ist die Erfindung nicht auf das gezeigte und beschriebene Ausführungsbeispiel beschränkt. In Abweichung hierzu kann die Skelettform der Verstellschaufeln auch gekrümmt sein, was selbstverständlich zu einer wesentlichen Verteuerung dieser Zusatzmassnahme führen würde, sofern es nicht um Gussteile handelt. Auch kann bei den Verstellschaufeln die Kontur der Schaufelspitze und des Schaufelfusses im Bereich der entsprechend ausgeführten, gegenüberliegenden Gehäuseteile gewölbt geformt sein, um anlässlich der Schaufeldrehung einen gleichbleibenden Spalt zu erzielen. Schliesslich ist die neue Massnahme keineswegs nur auf Turboladerturbinen beschränkt.

## Patentansprüche

1. Von einem kompressiblen Medium axial durchströmte Turbine mit mindestens einer Reihe verstellbarer Leitschaufeln (8) und mindestens einer Reihe Laufschaufeln (5), wobei stromaufwärts der verstellbaren Leitschaufeln ein Gitter mit festen Leitschaufeln (13) angeordnet ist,
dadurch gekennzeichnet,
- dass die festen Leitschaufeln so ausgelegt sind, dass die überwiegende Strömungsumlenkung in ihnen erfolgt,
- dass die verstellbaren Leitschaufeln (8) zumindest annähernd die gleiche Sehnenlänge (S) aufweisen wie die festen Leitschaufeln (13),
- und dass die verstellbaren Leitschaufeln (8) ein Verhältnis Sehnenlänge (S) zu Teilung (T) aufweisen, welches wesentlich kleiner ist als jenes der festen Leitschaufeln.

2. Axialdurchströmte Turbine nach Anspruch 1, dadurch gekennzeichnet, dass das Verhältnis Sehne zu Teilung (S/T) der verstellbaren Leitschaufeln (8) ca. die Hälfte des Verhältnisses Sehne zu Teilung der festen Leitschaufeln (13) beträgt.

3. Axialdurchströmte Turbine nach Anspruch 1, dadurch gekennzeichnet, dass die verstellbaren Leitschaufeln (8) eine gerade Skelettlinie (14) mit symmetrischem Profil aufweisen.

4. Axialdurchströmte Turbine nach Anspruch 1, dadurch gekennzeichnet, dass die verstellbaren Leitschaufeln (8) im Bereich der Schaufeleintrittskante (15) in radialer Richtung konisch verlaufen.

5. Axialdurchströmte Turbine nach Anspruch 1, dadurch gekennzeichnet, dass der durchströmte Turbinenkanal (1) im Bereich der verstellbaren Leitschaufeln (8) zylindrisch verläuft.

## Claims

1. Turbine with a compressible medium flowing through it axially and with at least one row of adjustable guide vanes (8) and at least one row of rotor blades (5), a cascade with fixed guide vanes (13) being arranged upstream of the adjustable guide vanes,
characterized in that
- the fixed guide vanes are configured in such a manner that most of the flow deflection takes place therein,
- in that the adjustable guide vanes (8) have at least approximately the same chord length (S) as the fixed guide vanes (13)
- and in that the adjustable guide vanes (8) have a ratio of chord length (S) to pitch (T) which is substantially smaller than that of the fixed guide vanes.

2. Axial flow turbine according to Claim 1, characterized in that the chord to pitch ratio (S/T) of the adjustable guide vanes (8) is approximately half of the chord to pitch ratio of the fixed guide vanes (13).

3. Axial flow turbine according to Claim 1, characterized in that the adjustable guide vanes (8) have a straight camber line (14) and symmetrical profile.

4. Axial flow turbine according to Claim 1, characterized in that the adjustable guide vanes (8) extend conically in the radial direction in the region of the vane leading edge (15).

5. Axial flow turbine according to Claim 1, characterized in that the turbine flow passage (1) extends cylindrically in the region of the adjustable guide vanes (8).

## Revendications

1. Turbine parcourue axialement par un fluide compressible, avec au moins une rangée d'aubes directrices réglables (8) et au moins une rangée d'aubes mobiles (5), dans laquelle une grille avec des aubes directrices fixes (13) est disposée en amont des aubes directrices réglables, caractérisée
- en ce que les aubes directrices fixes sont conçues de telle façon que la déviation principale de l'écoulement se produise dans celles-ci,
- en ce que les aubes directrices réglables (8) présentent au moins approximativement la même longueur de corde (S) que les aubes directrices fixes (13), et
- en ce que les aubes directrices réglables (8) présentent un rapport de la longueur de corde (S) au pas (T), qui est sensiblement plus petit que celui des aubes directrices fixes.

2. Turbine axiale suivant la revendication 1, caractérisée en ce que le rapport de la corde au pas (S/T) des aubes directrices réglables (8) vaut environ la moitié du rapport de la corde au pas des aubes directrices fixes (13).

3. Turbine axiale suivant la revendication 1, caractérisée en ce que les aubes directrices réglables (8) présentent une ligne moyenne (14) rectiligne avec un profil symétrique.

4. Turbine axiale suivant la revendication 1, caractérisée en ce que les aubes directrices réglables (8) sont orientées en direction conique dans la région de l'arête d'entrée (15) des aubes.

5. Turbine axiale suivant la revendication 1, caractérisée en ce que le canal d'écoulement de la turbine (1) est cylindrique dans la région des aubes directrices réglables (8).
